# EUROPÄISCHE PATENTSCHRIFT

(11) **EP 0 973 342 B1**
(45) Veröffentlichungstag und Bekanntmachung des Hinweises auf die Patenterteilung: **05.04.2006**
(21) Anmeldenummer: 99112568.3
(22) Anmeldetag: 01.07.1999
(51) Int. Cl.: H04Q 3/00, H04L 12/24

(54) **Verfahren und Kommunikationssystem zur Behandlung von Alarmen durch ein mehrere Managementebenen aufweisendes Managementnetz**
Method and communication system for processing alarms in a network with several management layers
Procédé et système de communication pour le traitement d'alarmes par un réseau de gestion comportant plusieurs niveaux de gestion

(30) Priorität: 15.07.1998 DE 19831825
(43) Veröffentlichungstag der Anmeldung: 19.01.2000
(73) Patentinhaber: SIEMENS AKTIENGESELLSCHAFT, 80333 München (DE)
(72) Erfinder: Hirsch, Lucian, 81373 München (DE)

(56) Entgegenhaltungen:
- WO-A-94/19912
- WO-A-96/20547
- WO-A-98/00784
- GB-A- 2 308 777
- US-A- 5 768 501

## Beschreibung

Die Erfindung betrifft ein Verfahren sowie ein entsprechendes Kommunikationssystem zur Behandlung von Alarmen durch ein Managementnetz, das zumindest zwei Managementeinrichtungen in verschiedenen Managementebenen aufweist.

Die Prinzipien eines Managementnetzes, die auch als TMN-Prinzipien (Telecommunications Management Network) bezeichnet werden, definieren mehrere Managementebenen mit Managementeinrichtungen für das Management eines Kommunikationssystems - beispielsweise eines Mobil-Kommunikationssystems - , wobei jede Ebene eine doppelte Funktion hat. Im managenden System hat jede Ebene außer der untersten eine Manager-Funktion für die darunterliegende Ebene. Im gemanagten System hat jede Ebene außer der obersten eine Agenten-Funktion für die nächsthöhere Ebene.

Das Dokument GB 2 308 777 A beschreibt ein Managementnetz, in welchem Objekte anhand der Werte ihrer Attribute gefiltert werden.

Das Fehlermanagement ("Fault Management") ist ein wichtiger Teil des TMN-Managements. Grundsätzlich können aktive Alarme auf Grund von Fehlern im Kommunikationssystem generiert, an den Agent einer Managementebene gemeldet und von dort zum Manager der nächsthöheren Managementebene weitergeleitet werden. Die Alarme können bekanntlich jeweils von den Managementeinrichtungen empfangen und entweder von der als Agent tätigen Managementeinrichtung oder von der als übergeordneter Manager tätigen Managementeinrichtung gespeichert sowie für eine bestimmte Zeitdauer von jeweils mit den Managementeinrichtungen verbundenen Operatoren behandelt werden. So liegt ein beispielhafter Anwendungsfall der zeitabhängigen Alarmbehandlung dann vor, wenn die eine Managementeinrichtung nur bei Tage und die andere Managementeinrichtung nur bei Nacht sowie an besonderen Tagen verantwortlich ist.

Mit den Managementeinrichtungen sind die Operatoren gekoppelt, die eine oder mehrere Funktionen zur Alarmbehandlung - z.B. Bestätigen des Alarms, Untersuchen der Fehlermeldung anhand der empfangenen Alarmdaten, Maßnahmen zur Beseitigung des Fehlers, Information über das Ergebnis der Fehlerbeseitigung - ausführen. Diese Funktionen können von den Managementeinrichtungen bzw. deren Operatoren unabhängig voneinander in der Zeitdauer ihrer Verantwortlichkeit gesteuert und ausgeführt werden.

In der älteren Patentanmeldung P 19752614.4 sind ein Verfahren und ein Kommunikationssystem zur Behandlung von Alarmen für einen Alarmdatenabgleich angegeben, die eine Basisfunktionalität in der Manager-Agent-Beziehung beschreiben. Dabei sendet der Agent die aktiven Alarme als Sequenz standardisierter M-EVENT-REPORTS, die generische CMISE- (Common Management Information Service Element) Prozeduren gemäß ITU-T X.710 darstellen. Zusätzlich definiert eine ITU-T X.733 den Inhalt einer standardisierten Alarmübertragung (alarm report).

Aufgabe der Erfindung ist es, ein Verfahren und ein Kommunikationssystem zur Behandlung von Alarmen durch ein mehrere Managementebenen aufweisendes Managementnetz anzugeben, durch das eine automatische Abstimmung bei der Alarmbehandlung zwischen den Managementeinrichtungen unterschiedlicher Ebenen erzielbar ist.

Diese Aufgabe wird gemäß der Erfindung hinsichtlich des Verfahrens durch die Merkmale des Patentanspruchs 1 und hinsichtlich des Kommunikationssystems durch die Merkmale des Patentanspruchs 17 gelöst. Weiterbildungen der Erfindung sind den Unteransprüchen zu entnehmen.

Davon ausgehend, daß aktive Alarme jeweils von den Managementeinrichtungen empfangen und entweder von der einen Managementeinrichtung oder von der anderen Managementeinrichtung gespeichert sowie für eine bestimmte Zeitdauer von jeweils mit den Managementeinrichtungen gekoppelten Operatoren behandelt werden können, wird gemäß dem Gegenstand der Erfindung eine Kontrollfunktion mit einem oder mehreren Kontrollattributen zur gegenseitigen Information über die Alarmbehandlung zwischen den Managementeinrichtungen eingeführt.

Das Kommunikationssystem zur Alarmbehandlung gemäß dem Gegenstand der Erfindung weist eine Kommunikationsschnittstelle zwischen den Managementeinrichtungen zur Einführung einer Kontrollfunktion mit einem oder mehreren Kontrollattributen zur gegenseitigen Information über die Alarmbehandlung auf.

Durch die erfindungsgemäße Kontrollfunktion erfolgt eine automatische Abstimmung bei der Alarmbehandlung zwischen den in einer Manager-Agent-Beziehung befindlichen Managementeinrichtungen unterschiedlicher Managementebenen. Der durch die zeitliche Aufteilung der Zuständigkeit für die Alarmbehandlung verursachte Nachteil der jeweiligen Managementeinrichtung, nicht in ihrer Managementebene über neueste Veränderungen bei der Alarmbehandlung in der anderen Managementebene informiert zu sein, wird durch Einführung der Kontrollfunktion mit Kontrollattributen auf einfache und signalisierungsarme - damit wirtschaftliche - Weise beseitigt. Der Einsatz dieser Kontrollfunktion ermöglicht überhaupt erst einen Austausch von Informationen über die Alarmbehandlung. Die automatische Abstimmung der Managementeinrichtungen bewirkt darüber hinaus eine Optimierung des Fehlermanagements im Managementnetz und eine wesentliche Aufwandsreduzierung bei den Operatoren.

Gemäß besonders vorteilhafter Weiterbildungen der Erfindung werden von der Managementeinrichtung ein Kontrollattribut zur Kennzeichnung des Behandlungszustands und/oder ein Kontrollattribut zur Kennzeichnung der Historie der Alarmbehandlung für den gespeicherten aktiven Alarm gesetzt. Dadurch lässt sich die automatische Abstimmung der Alarmbehandlung von der jeweiligen Managementeinrichtung parametrisieren.

Gemäß einer weiteren vorteilhaften Ausgestaltung der Erfindung werden für den Fall, dass von dem Agent die Alarmbehandlung durchgeführt und Änderungen an den Kontrollattributen vorgenommen werden, diese Änderungen in einer Nachricht zur Aktualisierung der Alarmbehandlung an den Manager gesendet. Alternativ dazu werden für den Fall, dass von dem Manager die Alarmbehandlung durchgeführt und die Kontrollattribute gesetzt werden, diese Kontrollattribute in einer Setznachricht zur Abfrage des Behandlungszustands für den aktiven Alarm an den Agent gesendet.

Nachstehend wird die Erfindung anhand von Ausführungsbeispielen unter Bezugnahme auf Figuren näher erläutert. Es zeigen
- FIG 1: das Blockschaltbild eines Managementnetzes für ein Mobil-Kommunikationssystem mit Agent-Manager-Beziehung zwischen Managementeinrichtungen unterschiedlicher Ebenen,
- FIG 2: den Nachrichtenfluß zwischen dem Agent und dem Manager für eine von einem Betriebs- und Wartungszentrum durchgeführte Alarmbehandlung gemäß der Erfindung, und
- FIG 3: den Nachrichtenfluß zwischen dem Manager und dem Agent für eine von einem Netzmanagementzentrum durchgeführte Alarmbehandlung gemäß der Erfindung.

Das Ausführungsbeispiel beschreibt die Erfindung anhand eines TMN-Konzepts für das Management eines Mobil-Kommunikationssystems, das beispielsweise Netzeinrichtungen eines Mobilfunknetzes nach dem GSM-Standard aufweist. Die Erfindung ist weder auf ein GSM-Mobilfunknetz noch auf Mobilfunknetze allgemein beschränkt, sondern läßt sich auf Telekommunikationsnetze jeder Art, die ein TMN-Managementnetz nutzen, anwenden.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit die nächste Hierarchieebene bildenden Funkstationen, die als Basisstationen bezeichnet werden. Die die Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dienen. Überwachungsmaßnahmen und Konfigurierungsmaßnahmen werden hierzu meist vom Betriebs- und Wartungszentrum aus ferngesteuert, die üblicherweise im Bereich der Mobilvermittlungsstellen angeordnet sind. Ein Betriebs- und Wartungszentrum kommuniziert dabei jeweils mit einem Basisstationssystem oder Vermittlungssystem über eine definierte Schnittstelle. Das Fehler-Management ist einer der wichtigsten TMN-Bereiche. Unter Normalbedingungen, d.h. wenn die Kommunikation zwischen Netzeinrichtungen und den Betriebs- und Wartungszentren bzw. zwischen den Betriebs- und Wartungszentren und einem übergeordneten Netzmanagementzentrum (Network Management Centrum) betriebsbereit ist, werden die relevanten Alarme ("alarm notifications") von den Netzeinrichtungen an das Betriebs- und Wartungszentrum und - wenn erforderlich - von dort an das Netzmanagementzentrum weitergeleitet. Aktive Alarme sind diejenigen Alarme, deren Ursache in den Netzeinrichtungen noch nicht behoben sind.

Eine weitere Aufgabe des Betriebs- und Wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Instanzen von gemanagten Objekten, die insgesamt die netzspezifische Managementinformationsbasis bilden. Ein gemanagtes Objekt im Sinne des Konfigurationsmanagements ist eine logische Abstraktion einer Ressource im Mobil-Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

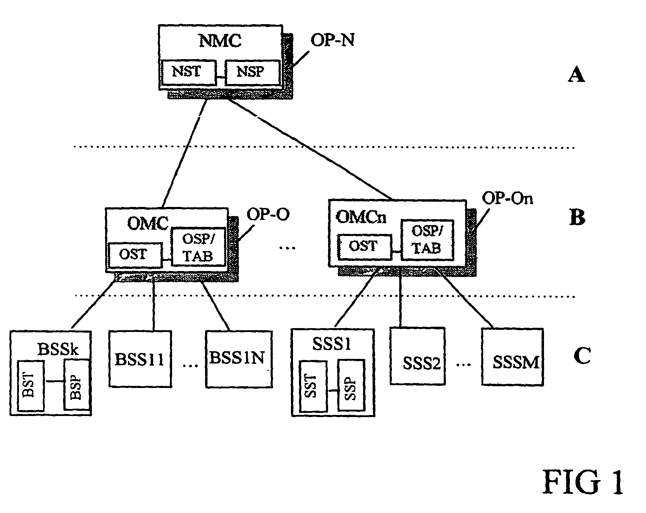

Für das Management des Mobil-Kommunikationssystems definieren die TMN-Prinzipien mehrere Ebenen ("Levels"), von denen im vorliegenden Beispiel drei Ebenen unter Bezugnahme auf die FIG 1 nachfolgend erläutert werden.

Die FIG 1 zeigt jeweils drei Ebenen A, B und C des Managementnetzes, von denen die Managementebene C die Netzeinrichtungsebene ("Network Element Level") mit mehreren Basisstationssystemen BSSk, BSS11...BSS1N sowie BSS21, BSS22 ... BSS2M sowie mehreren Vermittlungssystemen SSS1, SSS2... SSSM enthält. Die Managementebene B kennzeichnet die Netzeinrichtungsmanagementebene ("Network Element Management Level"), in der Betriebs- und Wartungszentren OMC1...OMCn jeweils die herstellerspezifische Managementfunktionalität für einzelne Subsysteme, wie im vorliegenden Beispiel das Betriebs- und Wartungszentrum OMC1 für die Basisstationssysteme BSSk ...BSS1N und das Betriebs- und Wartungszentrum OMCn für die Vermittlungssysteme SSS1...SSS2M, bereitstellen. Die Managementebene A kennzeichnet die Netzmanagementebene ("Network Management Level"), in der zumindest ein übergeordnetes Netzmanagementzentrum NMC jeweils eine integrierte, vom Hersteller unabhängige Management-Funktionalität realisiert. Dabei hat das Netzmanagementzentrum NMC als Manager einen Zugriff zu den als Agent tätigen Netzeinrichtungen der nächstniedrigeren Managementebene B, im vorliegenden Beispiel zu den Betriebs- und Wartungszentren OMC1 und OMCn. Zwischen den Netzeinrichtungen unterschiedlicher Managementebenen sind definierte Schnittstellen zur Informationsübertragung vorgesehen.

Die Alarme können bekanntlich jeweils von den Managementeinrichtungen empfangen und entweder von der als Agent tätigen Managementeinrichtung - z.B. OMC, OMCn - oder von der als übergeordneter Manager tätigen Managementeinrichtung - z.B. NMC - gespeichert werden. Mit den Managementeinrichtungen sind Operatoren OP-N, OP-O, OP-On gekoppelt, die eine oder mehrere Funktionen zur Alarmbehandlung - z.B. Bestätigen des Alarms, Untersuchen der Fehlermeldung anhand der empfangenen Alarmdaten, Maßnahmen zur Beseitigung des Fehlers, Information über das Ergebnis der Fehlerbeseitigung - ausführen. Diese Funktionen können von den Managementeinrichtungen bzw. deren Operatoren unabhängig voneinander in der Zeitdauer ihrer Verantwortlichkeit gesteuert und ausgeführt werden.

Beim Auftreten eines Alarms, der dem Operator OP-N bzw. OP-O, OP-On optisch und eventuell auch akustisch mitgeteilt wird, werden entsprechende Aktionen zur Alarmbehandlung unternommen werden. Die Alarmbehandlung kann, abhängig vom Zeitpunkt seines Auftretens, entweder am Betriebs- und Wartungszentrum OMC, OMCn oder am Netzmanagementzentrum NMC stattfinden. So erfolgt die Alarmbehandlung beispielsweise während des Tages am jeweiligen, für eine bestimmte Region zuständigen Betriebs- und Wartungszentrum OMC, während bei Nacht, am Wochenende oder an Feiertagen die Alarme für das gesamte Netz am übergeordneten Netzmanagementzentrum NMC, das üblicherweise weit entfernt von den einzelnen regionalen Betriebs- und Wartungszentren OMC...OMCn liegt, zu behandeln sind.

Bei der Alarmbehandlung sing grundsätzlich folgende Phasen möglich:
- Das Auftreten eines Alarms muß von einem Operator zunächst "bestätigt werden, d.h. der Operator hat davon Kenntnis genommen. Durch die Alarmbestätigung übernimmt der Operator die Verantwortung für die Veranlassung weiterer Schritte zur Fehlerbeseitigung, andererseits erfolgt damit auch eine implizite. Abstimmung zwischen mehreren Operatoren auf der gleichen Managementebene, d.h. beispielsweise an einem Betriebs- und Wartungszentrum OMC bei Tage.
- Der Operator, der das Auftreten eines Alarms bestätigt hat, muß anschließend:
   a) die Fehlermeldung untersuchen
   b) Instandsetzungsmaßnahmen entscheiden
   c) Service-Techniker vor Ort entsprechend beauftragen
   d) über die Ergebnisse der Instandsetzungsmaßnahmen vor Ort unterrichtet werden.

Jeder dieser Einzelschritte kann eine längere Zeit in Anspruch nehmen, so daß ein Wechsel der Verantwortlichkeit für die Alarmbehandlung von dem regionalen Betriebs- und Wartungszentrum OMC zum übergeordneten Netzmanagementzentrum NMC in der Zwischenzeit stattfinden kann.

Das Netzmanagementzentrum NMC und jedes Betriebs- und Wartungszentrum OMC... und jedes Basisstationssystem BSSk... bzw. Vermittlungssystem SSS1... weisen jeweils eine Steuereinrichtung - siehe NST und OST und BST bzw. SST - sowie eine mit der jeweiligen Steuereinrichtung in Verbindung stehende Speichereinrichtung - siehe NSP und OSP und BSP bzw. SSP - auf. Ebenso verfügen sie über - nicht näher dargestellte - Sende/Empfangseinrichtungen für das Senden und Empfangen von Nachrichten und Informationen über die Schnittstellen zwischen den unterschiedlichen Managementebenen. Dabei verläuft die Nachrichten und Informationsübertragung auf der NMC-OMC-Schnittstelle gemäß einem definierten Objektmodell und auf der OMC-BSSk-Schnittstelle bzw. OMCn-SSS1-Schnittstelle gemäß einem anderen definierten Objektmodell. Die Betriebs- und Wartungszentren OMC...OMCn weisen darüber hinaus eine Zuordnungstabelle TAB auf, in der für die aktiven Alarme jeweils Werte (notification identifier) zur Kennzeichnung der an das Netzmanagementzentrum NMC weitergeleiteten und der vom Betriebs- und Wartungszentrum OMC empfangenen Alarmnachrichten eingetragen und einander zugeordnet werden.

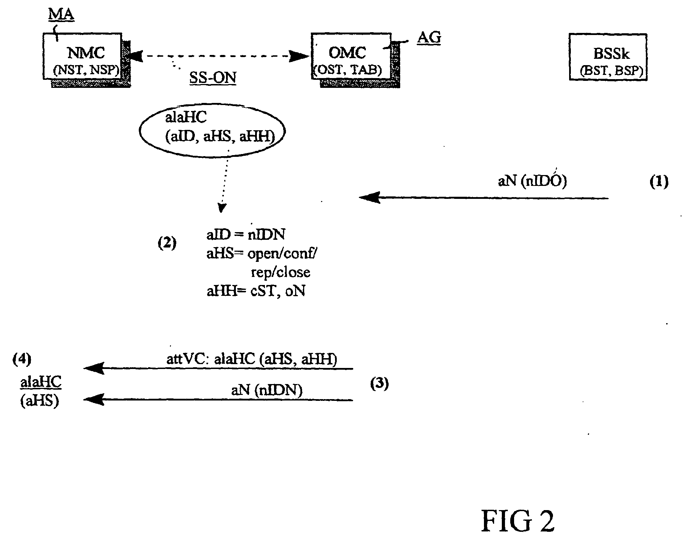

FIG 2 zeigt den Nachrichtenfluß zwischen Agent AG und Manager MA für eine von dem Betriebs- und Wartungszentrum OMC durchgeführte Alarmbehandlung gemäß dem Gegenstand der Erfindung, in den beispielsweise involviert sind: Das Netzmanagementzentrum NMC als Manager MA mit Steuereinrichtung NST und Speichereinrichtung NSP, das Betriebs- und Wartungszentrum OMC als Agent AG mit Steuereinrichtung OST und Speichereinrichtung OSP sowie Zuordnungstabelle TAB, sowie das Basisstationssystem BSSk mit Steuereinrichtung BST und Speichereinrichtung BSP.

Gemäß dem Gegenstand der Erfindung erfolgt eine automatische Abstimmung bei der Alarmbehandlung auf der Schnittstelle SS-ON zwischen der Managementeinrichtung OMC (mit angeschlossenem Operator OP-O, siehe FIG 1) und der Managementeinrichtung NMC (mit angeschlossenem Operator OP-N, siehe FIG 1) auf unterschiedlichen Management-Ebenen. Zu diesem Zweck wird eine Kontrollfunktion alaHC (alarmHandlingControl) mit einem oder mehreren Kontrollattributen aID (alarmID), aHS (alarmHandlingStatus), aHH (alarmHandlingHistory) zur gegenseitigen Information über die Alarmbehandlung eingeführt. An der OMC-NMC-Schnittstelle SS-ON wird die Kontrollfunktion aalaHC ls Objektklasse definiert, zu der für jeden aktiven Alarm ein Eintrag mit den obigen Kontrollattributen vorliegen kann:
aID: Dieses Kontrollattribut wird von der Managementeinrichtung - Betriebs- und Wartungszentrum OMC oder Netzmanagementzentrum NMC - zur Identifikation des gespeicherten aktiven Alarms gesetzt. Es hat vorzugsweise immer den gleichen Wert wie der Parameter (notification identifier) der jeweils an die andere Managementeinrichtung weitergeleiteten Alarmnachricht (alarm notification).
aHS: Dieses Kontrollattribut kann zur Kennzeichnung des Behandlungszustands für den gespeicherten Alarm gesetzt werden. Es nimmt einen der Werte open, conf, rep, close an, wobei:
   - "open" angibt, dass es sich um einen neuen Alarm handelt, der von keinem Operator zur Kenntnis genommen worden ist,
   - "conf" (confirmed) angibt, dass der Alarm von einem Operator bestätigt, aber noch keine Instandsetzungsmaßnahmen eingeleitet worden sind
   - "rep" (repair) angibt, dass für diesen zuvor bestätigten Alarm schon Instandsetzungsmaßnahmen von einem Operator eingeleitet worden sind.
   - "close" (closed) angibt, dass die Fehlerursache für diesen Alarm beseitigt worden ist. Der Alarm ist trozdem, z.B. wegen fehlender Baustein-Initialisierung, Verbindungsausfall zwischen Netzeinrichtungen BSSk und Betriebs- und Wartungszentrum OMC noch aktiv.
aHH: Dieses Kontrollattribut wird zur Kennzeichnung der Historie der Alarmbehandlung für den gespeicherten aktiven Alarm gesetzt. Es enthält zumindest ein Wertepaar, von denen der erste Wert cST (changedStatusTime) den Zeitpunkt der Änderung des Kontrollattributs durch den Operator signalisiert und der zweite Wert oN den Namen des Operators, der den Alarm behandelt, enthält. Der Wert oN wird von der jeweiligen Managementeinrichtung OMC/NMC mit dem vom Operator beim Einbuchen (login) eingegebenen Namen automatisch belegt. Die Alarmbehandlung (inklusive der Änderungen des Zustandsattributs aHS darf nur von Operatoren mit bestimmten "Alarmbehandlungs-Rechten" verändert werden.

Vorzugsweise weist das Kontrollattribut aSH eine Sequenz von mehreren Wertepaaren auf, sodass sich beispielhaft folgende logische Schritte bei der Alarmbehandlung ergeben:
1. Ein von einem ersten Operator namens "ABC" bestätigter Alarm (alarmHandlingStatus = confirmed) hat für das ZustandsaAttribut aHH den Wert
   "<15.05.98 17:28><ABC> <00><00> <00><00>
2. Ein vom Operator "ABC" bestätigter Alarm, der von einem zweiten Operator "XYZ" mit Instandsetzungsmaßnahmen (alarmHandlingStatus = rep) und erfolgreicher Fehlerbeseitigung (alarmHandlingStatus = close) versehen worden ist, hat für das Zustandsattribut aHS den Wert:
   <15.05.98 17:28><ABC> <15.05.98 20:15><XYZ> <15.05.98 22:30><XYZ>

Die Darstellung eines Alarms für den Operator kann, abhängig vom Wert des Zustandsattributs aHS unterschiedlich sein, z.B. wird ein "open" Alarm rot und blinkend, ein "conf"-Alarm rot und nicht-blinkend dargestellt.

Der Nachrichtenfluß in FIG 2 zeigt zunächst eine von der Netzeinrichtung - im Beispiel von dem Basisstationssystem BSSk - generierte und zur Managementeinrichtung OMC gemeldete Alarmnachricht aN (alarm Notification), die gemäß standardisierter M-EVENT-REPORT Nachrichten der ITU-T X.710 definiert sind (1). Die Managementeinrichtung OMC empfängt und speichert die Nachricht aN, die im Nachrichtenfeld "notification identifier" den Wert nIDO (notifID_OMC) enthält. Anschließend wird der Alarm von der Managementeinrichtung OMC - wegen der Verantwortlichkeit bei Tage - gemäß der Kontrollfunktion alaHC aufbereitet (alarm mapping). Dabei besetzt sie bzw. ihre Steuereinrichtung OST das Zustandsattribut aID mit dem Wert nIDN (notifID_NMC) sowie die Kontrollattribute aHS, aHH mit entsprechenden Werten abhängig vom Bearbeitungszustand des Alarms (2). Dadurch, dass das Betriebs- und Wartungszentrum OMC die Alarmbehandlung sowie die Änderungen der Kontrollattribute vornimmt, erzeugt sie bzw. deren Steuereinrichtung OST eine Nachricht attVC (attributeValueChange notification) und sendet darin die geänderten Kontrollattribute zum Netzmanagementzentrum NMC (3). Ebenso wird vom Betriebs- und Wartungszentrum OMC der Alarm in einer neuen Alarmnachricht aN (alarm Notification) mit dem Wert nIDN (notifID_NMC) übermittelt. Das Netzmanagementzentrum NMC kann anhand der empfangenen neuen Kontrollattribute - insbesondere des Kontrollattributs aHS - die Kontrollfunktion alaHC zur Alarmbehandlung und deren grafische Darstellung aktualisieren (4). Auf diese Weise ist eine automatische Abstimmung bei der Alarmbehandlung zwischen OMC und NMC und deren Operatoren über die Schnittstelle SS-ON erreicht.

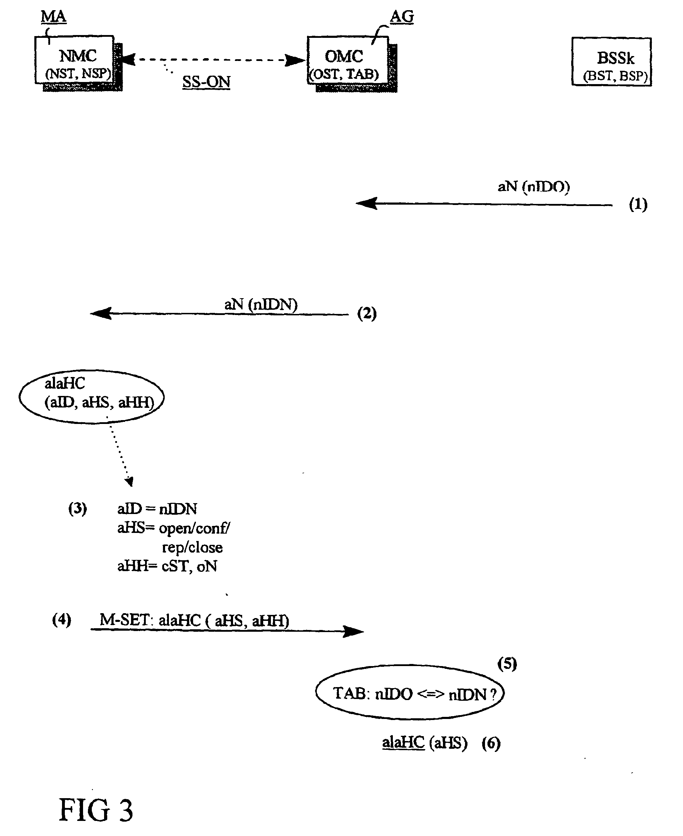

FIG 3 zeigt in Anlehnung an das Beispiel der FIG 2 einen Nachrichtenfluß zwischen Manager MA und Agent AG für eine von dem Netzmanagementzentrum NMC durchgeführte Alarmbehandlung gemäß der Erfindung. Ein im Basisstationssystem BSSk des Mobilfunknetzes entstandener Alarm wird als Alarmnachricht aN der Managementeinrichtung OMC gemeldet. Diese empfängt und speichert die Alarmnachricht aN, die wie im obigen Beispiel den Wert nIDO (notifID_OMC) im Nachrichtenfeld "notification identifier" aufweist. Anschließend wird der Alarm von der Managementeinrichtung OMC in einer neuen Alarmnachricht, die den anderen Wert nIDN (notifID_OMC) im Feld "Notification identifier" aufweist, an das Netzmanagementzentrum NMC weitergeleitet (2) . Dabei verwaltet das Betriebs- und Wartungszentrum OMC bzw. dessen Steuereinrichtung OST für alle aktiven Alarme die Zuordnungstabelle TAB, in der die Zuordnungen der Werte nIDO <==> nIDN eingetragen sind. Wenn nämlich während der Nacht ein neuer Alarm (mit "Notification identifier" = nIDN) vom OMC ans NMC übertragen und vom NMC-Operator "bestätigt" wurde, wendet das NMC die Kontrollfunktion alaHC mit Setzen entsprechender Kontrollattribute aID, aHS, aHH an (3). Dazu besitzt sie die Möglichkeit, über eine Setznachricht - das gemäß ITU-T X.710 CMISE-standardisierte Kommando M-GET - den Bearbeitungsstatus jedes aktiven Alarms automatisch zu erfahren. In der Setznachricht M-SET weist sie dem Kontrollattribut aID den Wert nIDN und den Kontrollattributen aHS, aHH die Werte entsprechend dem aktuellen Bearbeitungszustand im NMC zu (4). Das OMC wird anhand der Zuordnungstabelle TAB den ursprünglichen (mit "Notification identifier" = nIDO), noch blinkenden Alarm eindeutig identifizieren (5) und dessen Kontrollattribute entsprechend den übermittelten Informationen ändern und die graphische Darstellung aktualisieren können (z.B. nicht-blinkend). Vorzugsweise wird das den aktuellen Behandlungszustand kennzeichnende Kontrollattribut aHS durch das in der Setznachricht M-SET empfangene Kontrollattribut aHS ersetzt (6). Damit weisen die beiden Managementeinrichtungen OMC, NMC trotz unterschiedlicher Managementebenen den gleichen Bearbeitungszustand durch automatische Abstimmung gemäß der Kontrollfunktion auf.

Sowohl im OMC als auch im NMC muß eine vorhandene Alarmkorrelation zwischen einem "primären" Alarm und Folgealarmen berücksichtigt werden. Wird z.B. am OMC der "primäre" Alarm vom Operator "bestätigt", dann muß das System den Attributwert aHS für diesen und für alle damit zusammenhängenden Folgealarme automatisch verändern. Dementsprechend weden auch mehrere Nachrichten attVC (attributValueChange notifications) - siehe FIG 2 - ans NMC gesendet.

## Patentansprüche

1. Verfahren zur Behandlung von Alarmen durch ein Managementnetz, das zumindest zwei Managementeinrichtungen (OMC, NMC) in verschiedenen Managementebenen aufweist,
**dadurch gekennzeichnet,**
**dass** aktive Alarme jeweils von den Managementeinrichtungen (NMC, OMC) empfangen und entweder von der einen Managementeinrichtung (OMC) als Agent (AG) oder von der anderen Managementeinrichtung (NMC) als übergeordneten Manager (MA) gespeichert sowie für eine bestimmte Zeitdauer von jeweils mit den Managementeinrichtungen (OMC, NMC) gekoppelten Operatoren (ON-N, OP-O) behandelt werden können, und
**dass** für eine Kommunikationsschnittstelle (SS-ON) zwischen den zumindest zwei Managementeinrichtungen (OMC, NMC) eine Objektklasse (alaHC) mit einem oder mehreren Attributen (aID, aHS, aHH) zur gegenseitigen Information über die Alarmbehandlung zwischen den Managementeinrichtungen (NMC, OMC) verwendet wird.

2. Verfahren nach Anspruch 1, bei dem
von einer Managementeinrichtung (OMC, NMC) ein Attribut (aID) zur Identifikation des gespeicherten aktiven Alarms gesetzt wird.

3. Verfahren nach Anspruch 2, bei dem
das Attribut (aID) mit einem zur Kennzeichnung einer an die andere Managementeinrichtung (NMC, OMC) weiterzuleitenden Alarmnachricht (aN) benutzten Wert (nIDN) gleichgesetzt wird.

4. Verfahren nach einem der vorhergehenden Ansprüche, bei dem von einer Managementeinrichtung (OMC, NMC) ein Attribut (aHS) zur Kennzeichnung des Behandlungszustands für den gespeicherten aktiven Alarm gesetzt wird.

5. Verfahren nach Anspruch 4, bei dem
das Attribut (aHS) mit einem Wert (open) versehen wird, der angibt, daß der aktive Alarm von keinem Operator zur Kenntnis genommen worden ist.

6. Verfahren nach Anspruch 4, bei dem
das Attribut (aHS) mit einem Wert (conf) versehen wird, der angibt, daß der aktive Alarm von einem Operator bestätigt worden ist.

7. Verfahren nach Anspruch 4, bei dem
das Attribut (aHS) mit einem Wert (rep) versehen wird, der angibt, daß Instandsetzungsmaßnahmen für den aktiven Alarm von einem Operator eingeleitet worden sind.

8. Verfahren nach Anspruch 4, bei dem
das Attribut (aHS) mit einem Wert (close) versehen wird, der angibt, daß die Fehlerursache für den aktiven Alarm von einem Operator beseitigt worden ist.

9. Verfahren nach einem der vorhergehenden Ansprüche, bei dem von einer Managementeinrichtung (OMC, NMC) ein Attribut (aHH) zur Kennzeichnung der Historie der Alarmbehandlung für den gespeicherten aktiven Alarm gesetzt wird.

10. Verfahren nach Anspruch 9, bei dem
das Attribut (aHH) mit einem oder mehreren Wertepaaren (cST, oN) versehen wird, von denen jeweils
- der erste Wert (cST) den Zeitpunkt der Änderung eines zur Kennzeichnung des Behandlungszustands benutzten Attributs (aHS) angibt,
- der zweite Wert (oN) den Namen des den aktiven Alarm behandelnden Operators angibt.

11. Verfahren nach Anspruch 10, bei dem
das Attribut (aHH) eine Sequenz von Wertepaaren (cST, oN) auf Grund der Behandlung des aktiven Alarms durch verschiedene Operatoren enthält.

12. Verfahren nach einem der vorhergehenden Ansprüche, bei dem für den Fall, dass von dem Agent (AG) die Alarmbehandlung durchgeführt und Änderungen an den Attributen (aHC, aHH) vorgenommen werden, diese Änderungen in einer Nachricht (attVC) zur Aktualisierung der Alarmbehandlung an den Manager (MA) gesendet werden.

13. Verfahren nach einem der Ansprüche 1 bis 11, bei dem für den Fall, dass von dem Manager (MA) die Alarmbehandlung durchgeführt und die Attribute (aHC, aHH) gesetzt werden, diese Attribute (aHC, aHH) in einer Setznachricht (M-SET) zur Abfrage des Behandlungszustands für den aktiven Alarm an den Agent (AG) gesendet wird.

14. Verfahren nach Anspruch 13, bei dem
der Agent (AG) anhand einer Zuordnungstabelle (TAB), in der jeweils Werte (nIDN, nIDO) zur Kennzeichnung der an den Manager (MA) weitergeleiteten und vom Agent (AG) gespeicherten Alarmnachrichten für die aktiven Alarme eingetragen und einander zugeordnet werden, einen zum aktiven Alarm gehörigen ursprünglichen Alarm identifiziert und das den aktuellen Behandlungszustand kennzeichnende Attribut (aHS) durch das in der Setznachricht (M-SET) empfangene Attribut (aHS) ersetzt.

15. Verfahren nach einem der vorhergehenden Ansprüche, bei dem für den Fall, dass eine Korrelation zwischen einem ersten aktiven Alarm und Folgealarmen vorliegt, von der jeweiligen Managementeinrichtung (NMC, OMC) die für den ersten Alarm eingestellten Attribute (aID, aHS, aHH) und Werte in entsprechender Weise für die Folgealarme angewendet werden.

16. Verfahren nach einem der vorhergehenden Ansprüche, bei dem die als Agent (AG) tätige Managementeinrichtung (OMC) von einem Betriebs- und Wartungszentrum sowie die als Manager (MA) tätige Managementeinrichtung (NMC) von einem dem Betriebs- und Wartungszentrum übergeordneten Netzmanagementzentrum gebildet werden.

17. Kommunikationssystem zur Behandlung von Alarmen durch ein Managementnetz mit
zumindest einer Managementeinrichtung (OMC) als Agent (AG) und einer Managementeinrichtung (NMC) als übergeordneter Manager (MA),
**gekennzeichnet durch**
Mittel der Managementeinrichtungen (NMC, OMC) zum Empfangen und Speichern von aktiven Alarmen, welche für eine bestimmte Zeitdauer von jeweils mit den Managementeinrichtungen (OMC, NMC) gekoppelten Operatoren (OP-O, OP-N) behandelbar sind, eine Kommunikationsschnittstelle (SS-ON) zwischen den Managementeinrichtungen (NMC, OMC) mit einer Objektklasse (alaHC) mit einem oder mehreren Attributen (aID, aHS, aHH) zur gegenseitigen Information zwischen den Managementeinrichtungen (NMC, OMC) über die Alarmbehandlung.

## Claims

1. Method for alarm handling by a management network comprising at least two management devices (OMC, NMC) at different management levels, **characterised in that** active alarms are received in each case by the management devices (NMC, OMC) and either stored by the one management device (OMC) as an agent (AG) or by the other management device (NMC) as a superior manager (MA) and can also be handled for a specific period of time in each instance by operators (ON-N, OP-O) coupled to the respective management devices (OMC, NMC), and
that for a communication interface (SS-ON) between the at least two management devices (OMC, NMC) an object class (alaHC) with one or more attributes (aID, aHS, aHH) is used for exchanging mutual information about the alarm handling between the management devices (NMC, OMC)

2. Method according to claim 1, in which an attribute (aID) for identifying the stored active alarm is set by a management device (OMC, NMC).

3. Method according to claim 2, in which the attribute (aID) is equated with a value (nIDN) used to identify an alarm message (nN) to be routed to the other management device (NMC, OMC).

4. Method according to one of the preceding claims, in which an attribute (aHS) for identifying the operating status for the stored active alarm is set by a management device (OMC, NMC) .

5. Method according to claim 4, in which the attribute (aHS) is provided with a value (open), which specifies that the active alarm has gone unnoticed by any operator.

6. Method according to claim 4, in which the attribute (aHS) is provided with a value (conf), which specifies that the active alarm has been acknowledged by an operator.

7. Method according to claim 4, in which the attribute (aHS) is provided with a value (rep), which specifies that corrective maintenance measures for the active alarm have been initiated by an operator.

8. Method according to claim 4, in which the attribute (aHS) is provided with a value (close), which specifies that the error cause for the active alarm has been eliminated by an operator.

9. Method according to one of the preceding claims, in which an attribute (aHH) for identifying the history of the alarm handling for the stored active alarm is set by a management device (OMC,NMC).

10. Method according to claim 9, in which the attribute (aHH) is provided with one or more value pairs (cST, oN), from each of which
- the first value (cST) specifies the time of the change of an attribute (aHS) used for identifying the handling status,
- the second value (oN) specifies the name of the operator handling the active alarm.

11. Method according to claim 10, in which the attribute (aHH) contains a sequence of value pairs (cST, oN) as a result of the handling of the active alarm by different operators.

12. Method according to one of the preceding claims, in which, in the event that the alarm handling is carried out by the agent (AG) and changes are made to the attributes (aHC, aHH), these changes are sent to the manager (MA) in a message (attVC) in order to update the alarm handling.

13. Method according to one of claims 1 to 11, in which in the event that the manager (MA) carries out the alarm handling and sets the attribute (aHC, aHH), this attribute (aHC, aHH) is sent to the agent (AG) in a setting message (M-SET) to query the handling status for the active alarm.

14. Method according to claim 13, in which on the basis of an assignment table (TAB), in which values (nIDN, nIDO) for identifying the alarm messages for the active alarms stored by the agent (AG) and routed to the manager (MA) are entered and assigned to each other in each instance, the agent identifies an original alarm associated with the active alarm and replaces the attribute (aHS) identifying the current operating status by the attribute (aHS) received in the setting message (M-SET)

15. Method according to one of the preceding claims, in which in the event that a correlation is present between a first active alarm and subsequent alarms, the attributes (aID, aHS, aHH) and values adjusted for the first alarm are used correspondingly for the subsequent alarms by the respective management device (NMC, OMC).

16. Method according to one of the preceding claims, in which the management device (OMC) operating as an agent (AG) is formed by an operation and maintenance centre, and the management device (NMC) operating as a manager (MA) is formed by a network management centre superior to the operation and maintenance centre.

17. Communication system for handling of alarms by a management network with at least one management device (OMC) as an agent (AG) and a management device (NMC) as a superior manager (MA), **characterised by**
means of the management devices (NMC, OMC) for receiving and storing active alarms which can be handled for a specific time by operators (OP-O, OP-N) coupled in each instance to the management devices (OMC, NMC), a communication interface (SS-ON) between the management devices (NMC, OMC) with an object class (alaHC) with one or more attributes (aID, aHS, aHH) for mutual information exchange between the management devices (NMC, OMC) about the alarm handling.

## Revendications

1. Procédé pour le traitement d'alarmes par un réseau de gestion, qui présente au moins deux dispositifs de gestion (OMC, NMC) dans différents plans de gestion,
**caractérisé en ce que**
des alarmes actives peuvent être reçues respectivement par les dispositifs de gestion (NMC, OMC) et être mémorisées soit par un dispositif de gestion (OMC) en tant qu'agent (AG) soit par l'autre dispositif de gestion (NMC) en tant que gestionnaire (MA) prioritaire et peuvent être traitées pour une durée définie par des opérateurs (ON-N, OP-O) couplés respectivement avec les dispositifs de gestion (OMC, NMC)
et
**en ce que**, pour une interface de communication (SS-ON) entre les au moins deux dispositifs de gestion (OMC, NMC), on utilise une classe d'objet (alaHC) avec un ou plusieurs attributs (aID, aHS, aHH) pour l'information réciproque sur le traitement d'alarme entre les dispositifs de gestion (NMC, OMC).

2. Procédé selon la revendication 1, dans lequel un attribut (aID) est mis en place par un dispositif de gestion (OMC, NMC) pour l'identification de l'alarme active mémorisée.

3. Procédé selon la revendication 2, dans lequel l'attribut (aID) est assimilé à une valeur (nIDN) utilisée pour la caractérisation d'un message d'alarme (aN) à transmettre à l'autre dispositif de gestion (NMC, OMC).

4. Procédé selon l'une quelconque des revendications précédentes, dans lequel un attribut (aHS) est fourni par un dispositif de gestion (OMC, NMC) pour la caractérisation de l'état de traitement pour l'alarme active mémorisée.

5. Procédé selon la revendication 4, dans lequel l'attribut (aHS) est doté d'une valeur (open) qui indique qu'aucun opérateur n'a eu connaissance de l'alarme active.

6. Procédé selon la revendication 4, dans lequel l'attribut (aHS) est doté d'une valeur (conf) qui indique que l'alarme active a été confirmée par un opérateur.

7. Procédé selon la revendication 4, dans lequel l'attribut (aHS) est doté d'une valeur (rep) qui indique que des mesures de remise en état pour l'alarme active ont été mises en oeuvre par un opérateur.

8. Procédé selon la revendication 4, dans lequel l'attribut (aHS) est doté d'une valeur (close) qui indique que la cause d'erreur pour l'alarme active a été éliminée par un opérateur.

9. Procédé selon l'une quelconque des revendications précédentes, dans lequel un attribut (aHH) est fourni par un dispositif de gestion (OMC, NMC) pour la caractérisation de l'historique du traitement de l'alarme pour l'alarme active mémorisée.

10. Procédé selon la revendication 9, dans lequel l'attribut (aHH) est doté d'une ou plusieurs paires de valeur (cST, oN), dont respectivement
- la première valeur (cST) indique le moment de la modification d'un attribut (aHS) utilisé pour la caractérisation de l'état de traitement,
- la deuxième valeur (oN) indique le nom de l'opérateur traitant l'alarme active.

11. Procédé selon la revendication 10, dans lequel l'attribut (aHH) contient une séquence de paires de valeur (cST, oN) sur la base du traitement de l'alarme active par différents opérateurs.

12. Procédé selon l'une quelconque des revendications précédentes, dans lequel, dans le cas où l'agent (AG) effectue le traitement de l'alarme et procède à des modifications sur les attributs (aHC, aHH), ces modifications sont envoyées au gestionnaire (MA) dans un message (attVC) pour la mise à jour du traitement de l'alarme.

13. Procédé selon l'une quelconque des revendications 1 à 11, dans lequel, dans le cas où le gestionnaire (MA) effectue le traitement de l'alarme et fournit les attributs (aHC, aHH), ces attributs (aHC, aHH) sont envoyés à l'agent (AG) dans un message de livraison (M-SET) concernant l'interrogation de l'état de traitement pour l'alarme active.

14. Procédé selon la revendication 13, dans lequel l'agent (AG) identifie une alarme d'origine appartenant à l'alarme active à l'aide d'un tableau d'attribution (TAB), dans lequel respectivement des valeurs (nIDN, nIDO) sont inscrites et réciproquement attribuées pour la caractérisation des messages d'alarme transmis au gestionnaire (MA) et mémorisés par l'agent (AG), et remplace l'attribut (aHS) caractérisant l'état de traitement actuel par l'attribut (aHS) reçu dans le message de livraison (M-SET).

15. Procédé selon l'une quelconque des revendications précédentes, dans lequel, dans le cas où l'on a une corrélation entre une première alarme active et des alarmes successives, le dispositif de gestion (NMC, OMC) respectif applique les attributs (aID, aHS, aHH) et les valeurs réglés pour la première alarme de façon appropriée pour les alarmes successives.

16. Procédé selon l'une quelconque des revendications précédentes, dans lequel le dispositif de gestion (OMC) travaillant comme agent (AG) est formé par un centre d'exploitation et de maintenance et le dispositif de gestion (NMC) travaillant comme gestionnaire (MA) est formé par un centre de gestion de réseau prioritaire sur le centre d'exploitation et de maintenance.

17. Système de communication pour le traitement d'alarmes par un réseau de gestion avec
au moins un dispositif de gestion (OMC) comme agent (AG) et un dispositif de gestion (NMC) comme gestionnaire (MA) prioritaire,
**caractérisé par**
des moyens des dispositifs de gestion (NMC, OMC) pour la réception et le stockage d'alarmes actives, qui peuvent être traitées pour une durée définie par des opérateurs (OP-O, OP-N) couplés respectivement avec les dispositifs de gestion (OMC, NMC), une interface de communication (SS-ON) entre les dispositifs de gestion (NMC, OMC) avec une classe d'objet (alaHC) avec un ou plusieurs attributs (aID, aHS, aHH) pour l'information réciproque entre les dispositifs de gestion (NMC, OMC) concernant le traitement de l'alarme.
